(19) Europäisches Patentamt
European Patent Office
Office européen des brevets

(11) **EP 4 682 467 A1**

(12) **EUROPEAN PATENT APPLICATION**

(43) Date of publication:
**21.01.2026 Bulletin 2026/04**

(21) Application number: **24275089.1**

(22) Date of filing: **19.07.2024**

(51) International Patent Classification (IPC):
***G01C 21/00*** (2006.01)

(52) Cooperative Patent Classification (CPC):
**G01C 21/005**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **MBDA UK Limited
Stevenage, Hertfordshire SG1 2DA (GB)**

(72) Inventor: **The designation of the inventor has not
yet been filed**

(74) Representative: **BAE SYSTEMS plc
Group IP Department
Victory Point
Frimley
Camberley, Surrey GU16 7EX (GB)**

(54) **METHOD AND APPARATUS FOR ESTIMATING A LOCATION OF A PLATFORM**

(57) There is disclosed a method of estimating the location of an airborne platform, the airborne platform having a ground-facing camera having a field of view. The method comprises the steps of: moving the sightline of the camera through a range of directions; recording events triggered during motion of the sightline, each event being a change in intensity recorded at a pixel of the camera, and associating each event with a ground-referenced position; for each ground-referenced position within a patch, determining, from the recorded events, a resultant intensity gradient direction; determining a signature for the patch, which signature is the distribution of the resultant intensity gradient directions for the positions in the patch; and comparing the signature to a signature database to estimate the location of the airborne platform, the signature database comprising a number of predetermined signatures for patches at known locations.

Fig 2

## Description

FIELD OF THE INVENTION

This invention relates to a method and apparatus for estimating a location of a platform.

BACKGROUND OF THE INVENTION

A number of ways in which the location of a platform can be determined are known. Satellite-based systems, such as the global positioning system are now commonly used, but may not always be available, for example because signals from the satellites are obstructed. It is a particular problem in military applications, when it is also possible for the signals to be jammed or otherwise interrupted. Under these circumstances alternative ways of determining location must be used. Inertial management units can help, but they drift and therefore require regular location updates from other sources as well.

Image-based location determination is also known, and can be used for airborne platforms. Overflown terrain is imaged, and computationally matched to a stored database of imagery of the relevant region, or of salient features of the relevant region. For example, a database may store scale invariant feature transform (SIFT) points, or speeded up robust features (SURF) points of a relevant region. Such schemes can work well to match perceived image features to their equivalent in a database, especially if the region to be examined is relatively small. This may be the case if the location is constrained through knowledge of a prior-determined location. However, it is typically highly computationally intensive to determine a first location of a platform in a large possible search space. Significant time and/or processing power can be required; and storing the database of features can require a large amount of memory.

SUMMARY OF THE INVENTION

In accordance with a first aspect of the present invention there is provided a method for estimating the location of an airborne platform, the airborne platform having a ground-facing camera having a field of view, and method comprising the steps of:

　　i. moving the sightline of the camera through a range of directions;

　　ii. recording events triggered during motion of the sightline, each event being a change in intensity recorded at a pixel of the camera, and associating each event with a ground-referenced position;

　　iii. for each ground-referenced position within a patch, determining, from the recorded events, a resultant intensity gradient direction;

　　iv. determining a signature for the patch, which signature is the distribution of the resultant intensity gradient directions for the positions in the patch; and

　　v. comparing the signature to a signature database to estimate the location of the airborne platform, the signature database comprising a number of predetermined signatures for patches at known locations.

The method can operate to estimate position in the absence of external navigation signals, such as global positioning system signals. It therefore enables position to be determined in environments where global positioning system signals are unavailable for any reason. The method further provides a more computationally efficient manner of identifying a location from image data than is possible with existing methods of image-based navigation, and requires a significantly reduced storage capacity to hold the data necessary to enable the method over large regions.

The signature may be the distribution of the resultant intensity gradient directions amongst a set of intervals of resultant intensity gradient directions. Each recorded event may include an indication of the magnitude of the intensity change triggering the event. In other cases, the event may simply include an indication of whether the intensity change was positive or negative. Step (iii) may comprise determining a resultant intensity gradient magnitude. The step of recording events triggered during motion of the sightline may also comprise recording the ground-referenced direction of motion of the sightline at the time the event was captured.

The signature may be a histogram representing the sum of resultant intensity gradient magnitudes in each of a set of intervals of resultant intensity gradient directions. Where the terrain is varied, for example with roads or other features, such histograms have been found to exhibit clear characteristic features enabling comparison between signatures to distinguish true matches.

The camera field of view may cover an area on the ground that is at least twice the linear size of the patch. It may be that the camera field of view covers an area on the ground that is at least three times the linear size of the patch. It may be that the camera field of view covers an area on the ground that is at least four times the linear size of the patch.

The method may further comprise the step of determining a signature for one or more further patches of ground within the camera field of view during motion of the sightline.

The separation between the centres of the patch and one of the one or more further patches may be in the range between one hundredth and one quarter of the patch width.

The patch and the one or more further patches may be distributed evenly within the camera field of view. It will be understood that part of the camera field of view may not be used.

The camera may be an event camera. Event cameras can be used to directly output the data needed to create the signatures.

The signature database comprises may comprise an index, which index comprises a set of index values associated with each of the predetermined signatures. Each of the set of index values may have an associated characteristic signature feature. The step of comparing the signature to the signature database may comprise determining a value for at least one of the characteristic signature features for the signature, and identifying, from the index, those predetermined signatures having the most similar values for said at least one of the characteristic signature features. Use of such an index enables rapid searching of the database, so that the location of the platform can be determined at a suitable speed for use in navigation.

The characteristic signature features may comprise one or more of: a trigger threshold to which the camera pixels are set; a ratio of a minimum of the distribution to a maximum of the distribution; a mean of the distribution; a standard deviation of the distribution; a direction of the maximum of the distribution; a resultant vector of the signature; an angle between the direction of the maximum of the distribution and the direction of the minimum of the distribution; an angle between the direction of the maximum of the distribution and a direction of a second maximum of the distribution; and the ratio of the standard deviation of the distribution to the mean of the distribution.

The step of comparing the signature to the signature database may comprise the step of determining a correlation between the signature and each of a set of signatures in the signature database, the set of signatures being associated with a set of patches forming an integral region of terrain. Determining a correlation has been found to be a particularly effective method of comparison, with large numbers of such comparisons being able to be performed rapidly. For example, and as described in further detail below, it has been determined that the number of correlation comparisons that would need to be performed for determining a location in a fifty square kilometre area is likely to be well under one second.

The region of terrain may be determined as a result of constraints upon the location of the platform. The constraints may arise from data provided by an inertial management unit. The inertial management unit may, for example, constrain the distance by which the platform has travelled since the last determination of its location. The constraints may arise from information about the platform location obtained from previous measurements of platform location. The previous measurements may be measurements obtained using a method as described above. Alternatively the previous measurements may arise from global positioning system data, as may be the case if the platform moves from an area in which global positioning system signals are available to one in which they are not.

The method may further comprise the step of defining a matched filter for the signature database, the matched filter being determined from the signatures in the database, and using the matched filter to interrogate the correlation between the signature and each of a set of signatures in the signature database. The matched filter may for example represent the mean correlation surface of each set of four adjacent signatures in the signature database.

The index of the signature database may further comprise one or more figures of merit associated with each patch, which figures of merit provide a weighting to indicate a confidence level that can be associated with a signature match for that patch. The use of such figures of merit can have particular benefit where the method is used in conjunction with a navigation algorithm operable to maintain a plurality of tracks, as they can be used to better inform the confidence levels in any one particular track.

The orientation of the camera relative to the platform may remain constant whilst the sightline of the camera is moved. The range may include directions of up to 180° from a starting direction. The sightline may be moved such that it defines a U-shape on the ground. The sightline may be moved such that it defines, generally, a half-circle on the ground. The sightline may be moved such that it defines, generally, a circle, ellipse, oval or other loop on the ground.

The sightline may be moved by nutating the camera. For example, the camera may be mounted on a two-axis gimbal arrangement.

Alternatively, the sightline may be moved by rotating a prism adjacent to the camera sensor; or the sightline may be moved by rotating a mirror or other appropriate optical component in the sightline.

The invention extends to a navigation method comprising repeating the method described above to estimate a series of locations. The series of locations may form a track, or may form one or more tracks. The navigation method may further comprise, during the time between each location estimation, repeating a data capture cycle comprising the steps of

    i. moving the sightline of the camera through a range of directions;

    ii. recording events triggered during motion of the sightline, each event being a change in intensity recorded at a pixel of the camera, and associating each event with a ground-referenced position; and

    iii. for each ground-referenced position, determining, from the recorded events, a resultant intensity gradient direction;

and the method further comprising determining the relative motion of the platform by comparing a distribution of resultant gradient intensities obtained in a current data capture cycle with a distribution of resultant gradient intensities obtained in an earlier data capture cycle.

There are a number of ways in which the comparison can be used to infer relative motion. For example, an overlap area may be identified between sequential data capture cycles, the position of which can be used to infer relative motion. The method enables relative navigation to be performed without an inertial management unit, or in conjunction with an inertial management unit to reduce drift. The reduction of drift may for example enable a lower quality inertial management unit to be used. Relative navigation can be performed for example during periods when an absolute determination of location is temporarily unavailable. The earlier data capture cycle may for example be an immediately preceding data capture cycle.

Use of such a relative motion estimation in conjunction with the location estimation method can be used to narrow the area of database search for subsequent location estimations. Moreover, where the method is being used in conjunction with a navigation algorithm operable to maintain one or more potential tracks of platform position, the relative motion information can provide location information between confident database matches, so helping to improve confidence in any one track. It will also be noted that the method of determining relative motion has considerable synergies with the method of location estimation.

The field of view may include a plurality of patches of ground, and each data capture cycle may comprise the step of determining a signature for each of the plurality of patches, the signature being a distribution of resultant intensity gradients in said each of the plurality of patches. The signatures have been found to provide a computationally efficient manner in which to determine similarity between images of different patches. The comparison may comprise determining a number of translational shifts between pairs that match well in sequential data capture cycles, and inferring relative motion from these translational shifts.

The step of comparing one or more of the signatures obtained in a current data capture cycle with one or more of the signatures obtained in an earlier data capture cycle may comprise the step of determining a correlation between one or more of the signatures obtained in the current data capture cycle and one or more of the signatures obtained in the earlier data capture cycle. It may be that a correlation is determined between each of the signatures obtained in the current data capture cycle and each of the signatures obtained in the earlier cycle. However, it may be that a relative motion estimate is available, for example from previous data capture cycles; or from platform maximum velocity data, which can be used to limit the number of possible matches to a subset of the signatures.

The method may further comprise the steps of:

a) identifying, for one or more of the signatures obtained in the current data capture cycle, a best matching signature from the earlier data capture cycle, the best matching signature having the highest correlation with said each of the signatures obtained in the current data capture cycle, so as to identify matching signature pairs;

b) for each of the matching signature pairs, determining a translational shift between the patches associated with the matching signature pairs;

c) using the translational shifts to determine a relative position shift between the current data capture cycle and the earlier data capture cycle; and

d) inferring, from the relative position change, a translational movement of the platform between the current data capture cycle and an earlier data capture cycle.

The step of determining a relative position shift may comprise applying a consistency criterion to the translational shifts, and only using those matching pairs meeting the consistency criterion to determine the relative position shift. Since the translational shifts between genuine matching pairs should be the same, the consistency criterion is used to improve accuracy.

The step of determining a relative position shift may comprise determining the median of the translational shifts.

The consistency criterion may comprise determining that the translational shift is within a predetermined distance of the median translation shift. The predetermined distance may for example be in the range between one tenth and one patch width. The predetermined distance may be one half of a patch width.

The consistency criterion may comprise determining that the correlation score for the matching signature pairs is above a predetermined threshold.

The method may further comprise the step of, for each of the matching signature pairs meeting the consistency condition, determining an angular shift between signatures of the pair, and inferring, from the angular shifts, a change in heading of the platform.

The angular shift between a matching signature pair may maximise the correlation between the signatures in the pair. Alternatively, the step of determining an angular shift between signatures of the pair may comprise calculating a resultant vector for each of the signatures, and determining the difference between angles of the resultant vectors.

The invention extends to a computer-readable medium carrying instructions which, when read by a computer onboard an airborne platform, which airborne platform comprises a ground-facing camera, cause the computer to implement the method described above.

The invention further extends to an airborne platform comprising an event camera, a sensor operable to determine the altitude of the platform above the ground, and a processor, the event camera being arranged such that its sightline is movable; and the processor being configured to implement the method described above. The event camera may be mounted on a two-axis gimbal arrangement, and the two axis gimbal arrangement may comprise a gimbal resolver configured to output the angular position of the gimbal arrangement to the processor.

BRIEF DESCRIPTION OF THE DRAWINGS

Embodiments of the invention will now be described by way of example only and with reference to the accompanying drawings, of which:

Figure 1 is a flow diagram illustrating steps of a method in accordance with an example of the invention;

Figure 2 is a schematic illustration of an aerial platform according to an example of the invention and operating the method of Figure 1;

Figure 3 is a schematic illustration of a patch of terrain;

Figure 4 is a graphical representations of a signature of the patch of Figure 3;

Figure 5 is a flow diagram schematically illustrating steps in a method for searching a database of signatures;

Figures 6a and 6b are schematic illustrations of a further platform in accordance with an example of the invention;

Figure 7 is a graphical illustration of a correlation surface used to identify likely matches between signatures;

Figure 8 is a graphical illustration of the correlation surface of Figure 7, processed to emphasise true matches;

Figures 9a and 9b are schematic diagrams illustrating an arrangement of patches of a camera field of view; and

Figure 10 is a flow chart illustrating steps of a method in accordance with a further example of the invention.

DETAILED DESCRIPTION OF THE INVENTION

OVERVIEW

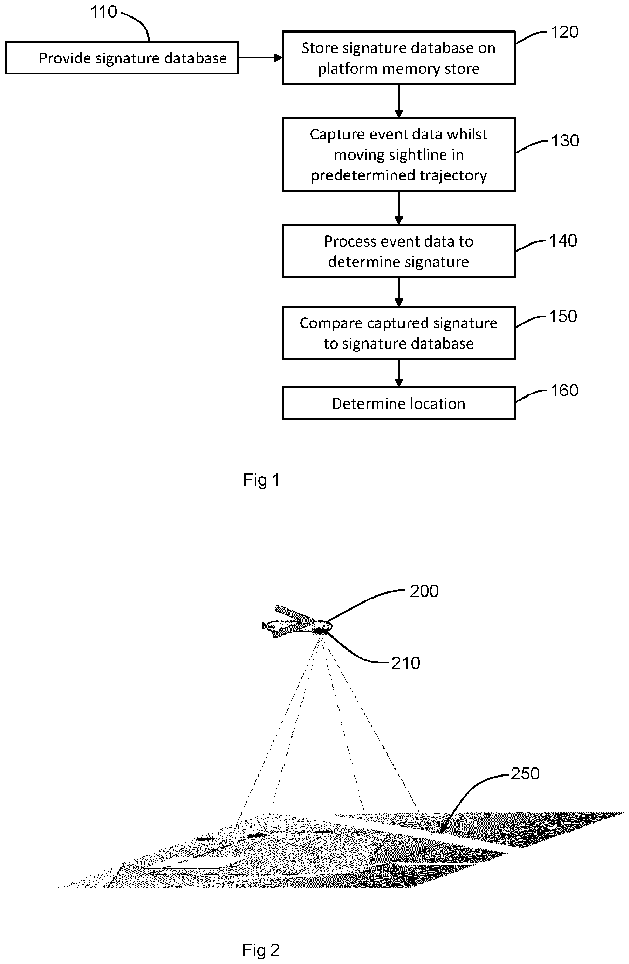

The embodiments described below provide an apparatus and method for locating an airborne platform. Figure 1 is a flow chart 100 providing an overview of a method for determining the location of a platform in accordance with an embodiment of the invention. At step 110, a signature database is provided. Each signature is associated with a patch of ground. The location of the patch is stored in the database, and associated with the signature. The region is divided into patches at known locations, and for each patch, a signature is defined. The signatures are constructed such that they can be sensed using an event camera onboard the platform, with the event camera being controlled so as to move its sightline through a range of directions. The signatures for each patch in the region are stored in the signature database that is constructed prior to the platform operating in the region. The signatures, and the construction of the signature database, are described in further detail below.

At step 120, the signature database is stored in a memory store onboard the platform. In this way, the platform has access to the signature database whilst it is moving in the region. At step 130, the platform captures event data, using an onboard event camera, whilst it moves the sightline of the event camera in a range of directions. The sightline is moved through a predetermined range of directions in order to capture the event data for one signature. In the present example, this is achieved by moving the sightline such that the projection of the sightline onto the ground beneath the platform defines a semi-circle. At step 140, the event data is processed to determine a sensed signature for the platform's present location. At step 150, the sensed signature is compared to the signature database. As will be appreciated, if the sensed signature matches a signature in the database, at step 160, the platform can determine its present location as being that associated with the matching signature in the signature database. Various techniques, described in further detail below, can be applied to determine a match, or a closest match signature, in the database.

SIGNATURE CAPTURE

In use, the signatures are captured using an event camera located on the platform. Event cameras are a specific class of camera. Event camera sensors comprise a number of pixels, as would be found in standard camera sensors, but the event camera pixels do not report the intensity to which they are exposed, but the rate at which it is changing. A number of event cameras are known. One exemplary type of event camera comprises a detector with an array of pixels. An image is projected onto the array. Impinging photons are registered as an electrical signal, and the rate at which the photons are arriving is noted. Each pixel in the event camera detector also has a reference level, and a threshold, which may for example be set at a 20% intensity change level. The photon arrival rate is equivalent to the scene intensity of the point corresponding to this pixel's position on the detector array. When the photon arrival rate of a given pixel differs from the reference level by more than the threshold, the pixel reference level is reset to the current intensity value, and the pixel sends an output to the camera computing core to register the change at this pixel's location. In this way, an asynchronous record can be kept, by the computing core, of the degree to which each area of the viewed scene is varying its intensity. In some cases, the pixel may alternatively or additionally send an output to the camera's external interface. The output may record only that the threshold level has been exceeded, or the direction in which the threshold level has been exceeded, or may record the amount by which the threshold level has been exceeded. In other words, the output may be simply that an event has occurred, or the output may record both that an event has occurred and the intensity of that event.

Standard framing camera pixels have a fixed capacitive well size and accumulate charge over a whole staretime. However each pixel has a finite storage capacity. If the rate of arrival of the photons is high enough, the pixel will saturate. That saturation limits the dynamic range of such cameras. Event cameras such as that described above do not have this limitation and have a significantly higher dynamic range than standard cameras. Event camera pixels typically fire and are registered in a period of the order of a millisecond; and up to of the order of 100 million events per second can be generated. Detector arrays for event cameras of size up to around one megapixel are available.

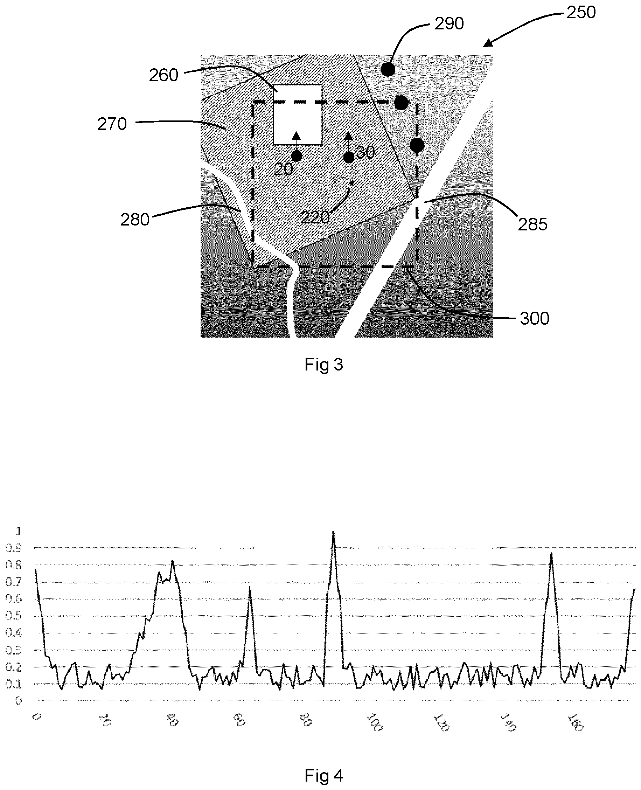

Figure 2 is a schematic illustration of a platform 200 flying over terrain 250. Platform 200 includes an event camera 210 that faces towards the ground and. The field of view of the camera is schematically illustrated in more detail in Figure 3. The field of view of the event camera covers a patch of terrain 300 illustrated by the box drawn in large-dashed line. In the following description, the 'upward' direction as seen in the Figure is referred to as 'north', with other directions referenced accordingly. A number of exemplary features are present in the field of view: a building 260 is located in a field 270; a stream 280 runs through the south-western corner of the field; a road 285 runs past the south-eastern corner of the field; and there are a number of bushes 290 in the north eastern corner of the field of view. As the platform 200 flies over the terrain, it moves the sightline of the event camera 210 in a range of directions. In this case the sightline is moved in a semi-circle 220 on the ground, such that it covers a 180° range of directions. The orientation of the camera is kept constant (for example, north facing) as the camera moves. As the sightline moves, the field of view of the event camera changes. The radius of the semi-circle is selected to be small relative to the overall size of the patch. There may be border portions of the patch which move out of the camera field of view whilst the sightline moves. These areas can be ignored in processing, but can be minimised by ensuring a small semi-circle radius. For example, the radius can be selected so that the initial ground-referenced centre of the semi-circle moves by only a few pixels on the camera sensor during the complete semi-circle. Thus, if the sightline motion begins in a northerly direction with a first point on the ground in the centre of the field of view, that first point will be at a distance of a diameter of the semi-circle, on the camera sensor, away from the centre of the field of view when the sightline completes its semi-circular motion and is moving in a southerly direction. The radius of the semi-circle may typically be selected to be between 5 and 20 pixels of the camera sensor, or between 5 pixels and approximately one fifth of the patch width.

As the sightline moves, the intensity recorded by some of the pixels of the event camera will change. Where the change in intensity is greater than the threshold value for any one pixel, that pixel will record an event. Two exemplary pixels are shown schematically at reference numerals 20 and 30 in Figure 3 close to the building 260. Pixel 20 is immediately south of building 260, whilst pixel 30 is south and east of the building 260. When the sightline moves such that these pixels image ground that is incrementally further north in one interval (as indicated by the arrows in Figure 3), pixel 20 will record an event as its view changes from one of field to one of building. Pixel 30 will not record an event, as it is too far to the east of building 260 for its view to change, and it will only view the field 270. The intensity recorded at pixel 230 will therefore not change by an amount as great as the threshold value. In contrast, when the sightline moves such that these pixels image ground that is incrementally further west, neither pixel will record an event, since both still view the field 270. An event camera controlled such that its sightline moves relative to the terrain from a particular point will therefore record a different number of events in dependence on the direction in which the sightline is moved. Sightline motion in a direction perpendicular to a linear image feature will typically cause far more pixels to be triggered than sightline motion parallel to the same feature.

In order to capture a signature for the patch of ground, the sightline is moved in a semi-circle whilst the orientation of the camera is kept constant. Events captured are output to a data processor, which maps the events to a ground referenced position. During a single cycle of data capture each recorded event is stored in an array of elements, each element having a ground-referenced position, and each event is allocated to the element having its associated ground-referenced position. The events are also associated with the direction in which the sightline was moving at the time of event capture, and, if the rate of sightline motion is not constant, or the sightline trajectory on the ground is not semi-circular, the rate of sightline motion at the time of event capture. The array is the same size as the camera sensor.

There are a number of ways in which the sightline can be moved. Optical components in the sightline path can be used, such as a rotating prism or mirror; of the camera itself can be mounted on a two-axis gimbal and nutated so that its sightline, projected onto the ground, defines a semi-circle. The orientation of the camera remains constant during the nutation. The direction of sightline motion is recorded using a feedback mechanism from the means of rotation. For example, where the camera is nutated on a two-axis gimbal, the direction of sightline motion can be recorded from gimbal resolvers; or, if a rotating mirror is used, a feedback mechanism reporting the current orientation of the mirror. A gimballed arrangement can also be used to compensate for platform vibration, or forward motion of the platform.

The camera can for example be nutated, using a gimbal arrangement, such that its sightline defines a circle on the ground, compensating for any forward motion. The camera can then be angled such that its sightline moves linearly forwards along the ground before starting a further nutation for a subsequent data capture cycle. This method has the advantage that it can be used to capture data from a semi-circle starting at any orientation. It should be noted that signatures recorded from a complete rotation will not be perfectly symmetrical about 180°, because a relative intensity trigger threshold for an event camera may only be passed when crossing a feature in one direction but not the other.

In one example, the sightline can be moved so that its projection onto the ground has radius of 10 pixels, with the semi-circle starting with the sightline moving north in a clockwise direction. An event recorded as the sightline is moving north, at the start of the data capture cycle, is allocated to a first element in the array, and recorded with the sightline direction north. A subsequent event recorded when the sightline is moving in a direction 37° to the east of north and captured by a pixel on the camera sensor that is two pixels to the 'west' and six pixels to the 'south' of the pixel capturing the first event will also be allocated to the first element, since the projection of the sightline onto the ground has moved by this amount as it progresses around the semi-circle.

The events at each element of the array are summed as vectors. The vector direction is derived from the angle the direction of sightline motion makes to a reference direction such as north. In a semi-circle trajectory, only sightline directions between 0° and 180° are sampled. The event data for angles between 180° and 360° would be expected to be a mirror image of that between 0° and 180°, because events are triggered by an intensity change at any one pixel, regardless of whether that change represents an increase or a decrease in intensity. The angle used for each vector direction is therefore double the angle that the sightline motion makes to the reference direction. Once the sum is performed, the total angle is halved to obtain the direction of the resultant intensity gradient. Each event may have unitary magnitude, if the camera outputs only that an event has occurred, or may have a magnitude equivalent to the amount by which it exceeds the reference value for that pixel, if that data is provided by the camera output.

The summing process produces a single resultant vector for each element, representing the resultant intensity gradient for the position on the ground to which that array element relates. The signature is then determined as the directional distribution of the resultant intensity gradients for the patch. A number of direction intervals are defined. For example, the intervals may have a size of 1°, so that a total of 180 intervals are defined for the full semi-circle of data capture. The resultant intensity gradients for each element are allocated to a respective interval, and their magnitude summed to determine the total value for each bin. In this way a histogram is created.

Figure 4 is a graphical illustration of the expected form of such a signature in the form of such a histogram. The signature has been normalised to the maximum. It will be seen that the illustration shows a general, background level of events at around 10% to 20% of the peak for each one degree interval. The background level may for example result from intensity variations observed within the boundaries of the features described, and from features such as bushes 290, which will result in a uniform number of events being recorded regardless of the direction of movement of the sightline. Relatively narrow spikes are seen at 0°, 90°, and 180°, arising from the intensity gradients at the edges of building 260. A relatively broad peak at around 40° arises from the stream 280, which does not have such a uniform direction as the walls of building 260. Peaks are also observed at around 65° and 155°, these arising from the edges of field 270. It will be seen that the peak at 155° is significantly higher than the peak at 65°, because only a part of the first edge is within the field of view.

An orientation of the patch can be selected. For example, the selection of aligning square patches to the north, south, east and west directions can be made. This orientation can be used independently of the camera orientation, since the entire field of view of the camera need not be used for signature capture. Certain adjustments (such as the use of angle independent characteristic signature features, described in further detail below) can be made in the event that the orientation is not known. The altitude above ground at which the signature is captured is also recorded. In flight, this information is used to relate the size of an area on the camera sensor to an actual ground area.

It is possible to record more than one signature during each cycle of data capture (in other words, during one semi-circle of motion of the projection of the camera sightline). Consider a first patch having a width $P$ that is less than half the width of the minimum camera field of view projected onto the ground. As the sightline of the camera is moved, events will be created, some of which will fall within the patch. Various other patches can also be defined in the field of view. For example, a second patch may be positioned at a distance $0.1P$ further north, and

still fall within the field of view of the camera. A signature for this second patch can be created independently in the same data capture cycle as that for the first cycle, since all the necessary raw data is captured during the same sightline motion. Many events will fall into both patches, whilst some will be present only in one.

Four hundred such overlapping patches, all within a square of side length 3*P* and linearly separated by 0.1*P* from their nearest neighbour, which fits within the camera field of view, can be used to create 400 signatures from one data capture cycle. The recording of multiple such patches increases the likelihood of obtaining a good match to at least one of the database patches. Assuming that the database patches do not overlap, at least one of these one hundred patches will be within 0.05*P* of at least one of the database patches. The nominal precision on the ground, assuming that the patch with the sensed signature which best matches the equivalent database signature is the one which is actually nearest to the database patch, is 0.05*P*. For patches of 100 m side, therefore, the precision would be 5 m, for a single best match.

SIGNATURE DATABASE

The signature database can be constructed in a number of ways. The database includes a database of signatures for patches within a region. The patches in the region are first defined, with a specific shape, size, orientation, and location. The database can be constructed using a platform having both an event camera with an appropriately movable sightline, and an independent method of determining its location, such as the global positioning system GPS. The event camera can then be used to sense the signature of each patch defined in the region, using its GPS navigation to determine its location, and navigate between patches. The parameters used to capture the event camera data can also be recorded. Such parameters might include the radius of the sightline rotation; the height of the platform above the ground when the data is captured; and the threshold value of intensity change above which an event will be captured.

The database can also be created by processing standard aerial imagery of a region, using a waveband of the user's choice. The aerial image data for each patch can be processed to determine what events would be recorded by an event camera moving its sightline in the predefined trajectory. Processing of readily available aerial imagery can be done by known algorithms, such as 'ESIM: an Open Event Camera Simulator', by Henri Rebecq, Daniel Gehrig, and Davide Scaramuzza, published in the Proceedings for the 2nd Conference on Robot Learning (CoRL 2018), Zurich, Switzerland. Given the wide availability of aerial imagery it is anticipated that the database is most likely to be constructed in this way. It will be noted that the database can also be created to emulate flight at a particular altitude with a camera of a particular resolution, so that the resulting database is appropriate for the platform and flight altitude at which it is to be used.

The presence of shadows on the ground may affect the signature for a patch. This effect can be mitigated by determining and sensing signatures in the long wave infrared (LWIR) waveband. At LWIR wavelengths, the effect of sun shadows is usually very small compared with the inherent intensity variation within a scene. A further clear advantage of operation in the LWIR waveband is that navigation will be available at all times, rather than only during daylight hours. Event cameras operating in the LWIR waveband are currently not commercially available but are being developed. Radio frequency images, for example obtained using synthetic aperture radar techniques, are also unaffected by solar shadows. Because the signatures are expected to be dominated by physical features present in the associated patch, it is also possible to use a signature database derived from images obtained in one waveband, and use that database for navigation in conjunction with a camera operating in a different waveband. Shadows can also be avoided by using images obtained under a cloudy sky (i.e. aerial imagery), or by using infra-red data captured at night. Of course, it may also possible to use event cameras to obtain the signatures more directly in these wavebands.

Signatures obtained from satellites in the visible band are likely to be affected by shadows, because the data can only be captured when the sky is clear and cloud free, and during daylight. It may therefore be preferable to use other types of data, such as those set out above, when forming the database. However, where shadows are present, their effect on the signatures obtained can be removed or mitigated. For example, automated algorithms exist for removing shadows from aerial imagery, operating using artificial intelligence techniques or RGB analysis, in which intrinsic local colour is captured for the image, regardless of the actual intensity. Capturing two signatures of the same patch at different times, so that shadows lie in different directions, enables the effect of the shadows to be cancelled by comparison of the two signatures. This is most effective where the shadows are formed by vertical objects. It may also be possible to remove the effect of shadows manually, though this would be a resource intensive task. If it is not possible to remove the effect of shadows from the signatures entirely, their presence and likely direction can be noted in the database, and used as metadata so that the level of reliance placed on that patch when determining a location can be modified.

The patches for the signatures stored in the database should be quite small, for example squares of side length of the order of tens or hundreds of metres, and preferably based on the finest available spatial resolution. Actual limits on resolution, sensitivity, and image size which would be required for the database data, will be dependent on a number of factors, including the type of event camera used on the platform, its optics, sensitivity, waveband, and the required accuracy of location estimates.

It is possible, where, for example, a platform is to operate a number of missions in different parts of a region, to generate an overall database of signatures for the region, and to create a database from the overall database for each particular mission. The particular database developed for any one mission can then be adapted, from the database, for the needs of that one mission. The database can be created using the smallest reasonably possible patches. The size may be limited by, for example, the resolution of satellite imagery, if that is being used to generate the signatures, or by the characteristics of an event camera being used to generate the signatures. A database of larger size patches can be created from smaller patches since the signature of a larger patch can be derived from the signatures of its constituent smaller patches. The signature of the larger patch will be the sum of the signatures of its constituent patches. The database provided to the platform for any one mission can therefore comprise signatures for relatively larger patches generated from the database of smaller patches.

Once constructed, the database of signatures is provided to the platform and stored in a memory store on the platform. The database can include the signatures and the characteristics defining how the signatures were obtained, such as the size of each patch, the separation of the patch centres, the shape of each patch, and the resolution of the camera obtaining the signature. The signatures will also have characteristic features, which can include the following items:

1. The trigger threshold to which the event camera pixels are set.

2. The ratio of the minimum total in any one interval to the maximum total in an interval.

3. The mean of the total in each of the intervals in the histogram.

4. The standard deviation of the total in each of the intervals in the normalised histogram.

5. The angle, relative to north, at which the interval capturing the maximum total lies.

6. The angle, relative to north, at which the histogram vector sum lies. For a semi-circular sightline trajectory, the histogram vector sum is calculated by associating the amplitudes at each interval with the angle of that interval to define a vector, doubling the angles, and then calculating a vector sum using the vectors with the doubled angle. :

7. The angles between any pair of items 5 to 7 above that relate to angles.

8. The angle between the interval capturing the largest number of events, and the interval capturing the second largest number of events.

9. The ratio of the histogram standard deviation divided by the histogram mean.

The database entry for each signature can include each of these items. A sorted reference index for the database is then created for each of these metrics, so that a signature can be retrieved from the database using one of the characteristic features. For example, it is then possible to directly retrieve from the database those signatures which have their maximum total recorded within a certain tolerance of 63° from north. Typically the database may include around ten such characteristic features, each with their own index. The characteristic features may be sorted in a number of different ways so as to facilitate searching the index.

The signature database can also include a matched filter based on the signatures present in the database. The construction of the filter is described in further detail below, but can be determined from the signatures of the patches in the database. The matched filter can be used to enable an efficient comparison of a number of signatures in a defined area with a set of signatures obtained during one data capture cycle.

The signature database can also include metrics to weight the extent to which a match with each patch should be considered to be a reliable predictor of a true match. Once the location of the platform has been suitably constrained, for example using the index to identify candidate locations (as is described in further detail below), or from a priori knowledge of a prior location coupled with information from, for example, an inertial management system, it is still possible for many potential matches between captured signatures and database signatures to be identified, many of which will be inappropriate. Correlation between captured signatures and database signatures can be used to further narrow the candidate matches, and it is useful to provide an indicative weight for each patch to indicate how much weight a high correlation score should be given. The features which provide these indicative weights are termed figures of merit. Thus, a patch having a relatively low figure of merit is less likely to represent a true match than a patch having a relatively higher figure of merit. Some example figures of merit are provided below:

i. Uniqueness: once the database has been created, the signature for every patch is correlated with a noisy version of the signature for every other patch, and itself. The added noise is set to be similar to what might be expected from the camera used for the method. The uniqueness is defined as the ratio of those database signatures having a lower correlation score to the original, noiseless signature than the noisy signature has to its original, noiseless self.

Clearly, the higher the uniqueness, the more likely any match to the signature is a true match for use in determining the location of the platform.

ii. Distinctiveness: this score is defined as the ratio of the correlation between a noisy version of a signature and the original version of that signature to the mean of the correlation of that signature to every other signature in the database. Clearly, the higher the distinctiveness the more likely any match to the signature is a true match for use in determining the location of the platform.

iii. Temporal stability: if multiple instances of the imagery used to create the database captured at different times are available, and if a database of signatures is produced from each time period, then, a temporal stability metric can be used to represent the amount to which a signature has undergone change over time. Temporal stability is defined as the correlation of a signature for a patch with an earlier signature for that patch. Use of this metric implicitly assumes that patches with a history of large changes are more likely to continue to be unstable into the future, whereas patches with a stable history are more likely to remain stable.

iv. Three-dimensional stability: a patch viewed from vertically above will give a different image when viewed at a forward looking angle. This remains the case even if assumptions are made to morph the image obtained from a forward looking camera into the image that would have been obtained from vertically above using a rectilinearisation process, unless the patch is completely flat. If a three dimensional world view is used to create the signatures for the database, signatures can be determined using multiple views, from different viewing angles, for the same patch, and a normalised consistency metric between the different signatures used as a figure of merit for three dimensional stability.

Both uniqueness and distinctiveness are also contextual. In other words, the uniqueness and distinctiveness of a patch are likely to be different when assessed against, for example, the eight patches immediately surrounding it as compared to when assessed against the entire database. As a result, these metrics can be determined for different contexts, and multiple values stored. For example, the uniqueness for a patch may be stored as determined against its nearest neighbours; its nearest and next-nearest neighbours; and the whole database. The number of uniqueness values stored for each metric, and the particular selections of patches against which they are determined, can be selected by a user in dependence on the actual terrain covered by the database. A figure of merit may also be defined where some of the database signatures are affected by the presence of shadows, so as to apply a reduced weighting to those signatures.

The signature database stored on the platform thus includes the signatures themselves, their characteristic features, their indices, and their figures of merit. Multiple databases may be provided to the platform, for example with different patch sizes; or as appropriate for different flight altitudes. The platform can then select the appropriate database to use for flight at its current altitude. The database is also captured for a specific nutation radius. It may also be possible to provide multiple databases for different nutation radii, should that be appropriate for a particular flight.

COMPARISON OF SENSED SIGNATURE TO DATABASE

1. Use of index

Use of the index makes searching the database significantly quicker. For example, a number of candidate patches can be identified quickly as those best matching each of the characteristic features of the navigation patch signature as measured by the platform. A bin-by-bin comparison, can then be made to identify the actual best match, for example, by calculating the correlation coefficient between the histogram of the flown and candidate patches. The ability to use the sorted index for each metric to list all of the database patches which lie within a specified tolerance of each of the metric values for a given patch provides a means to rapidly produce a small subset of the patches in the database against which the candidate patch can be checked. In most cases multiple candidate patches will appear in the nearest match groups of more than one metric. These may be checked first, thus minimising the time to find the correct patch even further. A number of different search algorithms can be constructed that make use of this advantage.

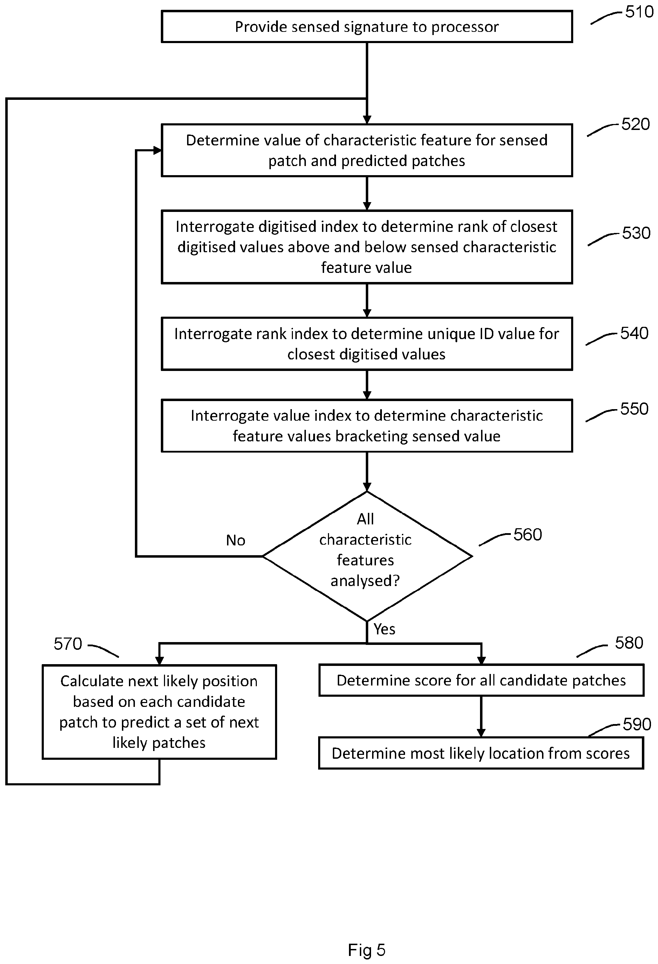

One example of a search algorithm that can be implemented on a processor using the method is schematically illustrated as a flow diagram in Figure 5. In this example the processor has been provided with an indexed signature database. The index comprises a number of lists of the values of characteristic features for each of the signatures in the database, each value having a unique identifier. The unique identifier can be a simple reference number, or any string that serves to uniquely identify the characteristic feature and associate it with a particular patch.

A first list of the values indexes the values of the characteristic features by their unique reference number. A second list orders the values of the characteristic features from smallest to largest and provides a rank to each characteristic feature. A third list provides a list of the ranks of each characteristic value ordered against a discretised list of potential values. The discretised list is created by dividing the difference between the maximum and minimum of the characteristic values into a number of discrete values at uniform intervals. Each discrete value is then associated, in the list, with the lowest characteristic value in the database that is larger than the discrete value. By way of example, for a characteristic feature that has values between a maximum of 6.8, and a minimum of, say 1.5, the interval may be selected to be 0.000530, so that there are 10,000 discrete values in the list. The index also includes the maximum and minimum value of each characteristic feature, and the location associated with each of the signatures in the database.

In a first step 510 a sensed signature is provided to the processor for searching against the indexed signature database. Any conditioning, such as normalisation, has been performed before the search algorithm commences. At a second step 520, a characteristic feature of the sensed signature is determined. For example, the sensed signature may be analysed to determine the ratio of the minimum total for any one bin to the maximum total for any one bin.

At a third step 530, the discretised list is interrogated. The minimum database value for the characteristic feature is subtracted from the sensed value, and this difference is divided by the interval between the discrete values on the list. The integer values immediately above and below the result provide the positions on the list of the discretised value immediately above and below the sensed values. The ranks of these values can be identified from the list of discretised values.

At a fourth step 540, the ranks obtained from the discretised list are used to interrogate the rank index so as to determine the unique identifier for the characteristic values associated with those ranks.

At a fifth step 550, the unique identifiers obtained are used to interrogate the identifier index so as to determine the actual values of the characteristic values in the database, and the positions of the patches thus identified. Once this is completed, the determined value of the characteristic feature for the sensed signature has led to the identification of two database patches having values for that characteristic feature that bracket the determined value.

At a sixth step 560, it is determined whether or not the values of all the characteristic features of the sensed signature have been determined. It will be appreciated that, if the angular orientation of the patch is uncertain, those characteristic features that are angle-independent (such as the separation between the two highest peaks, for example, or the ratio of the minimum interval value to the maximum interval value) can be determined and analysed first. If there remain some features for which the values are undetermined, the process repeats steps 520 to 550. If the values of all the characteristic features of the sensed signature have been determined, steps 520 to 550 will have generated a number of candidate patches, each of which are associated with one of the database values bracketing the sensed value for a particular feature. Thus the number of candidate patches will be up to twice the number of characteristic features stored in the database for each signature. Notably it may be less than this number because some characteristic features may of course identify the same candidate patch.

At step 570, a score is calculated for each of the candidate patches. The score enables a determination to be made of which candidate patch best matches the sensed signature. The score can for example be based on how similar the values of the characteristic features for the candidate signatures are to the corresponding value for the sensed signature. In this case the score may be the correlation coefficient between the sensed and candidate signatures, or the sum of the squares of the differences between the values of the candidate signatures and the corresponding value for the sensed signatures. In the former case the best match would have the highest score, and, in the latter, the candidate patch with the lowest score would be identified as the closest match. Such a score could also be used to determine a weighted mean of the locations of each of the patches which could be used to predict the likelihood that the platform was actually flying over a given candidate patch.

The positions of the candidate patches can optionally also be considered in the calculation of the score. For example, the score can be weighted using the sum of the mean square distances to the other candidate patches, so as to give greater weight to patches that are closer together, and less weight to outlier patches.

Once a first location has been determined in the above manner, the candidate patches identified in steps 520 to 550 can be used to support the determination of location in subsequent iterations of the method as further sensed signatures are received. The platform's current motion, determined for example from an inertial navigation system, can be used to predict which patches the platform may be flying over at the time the next sensed signature is received. Thus, at step 570, each candidate patch identified in steps 520 to 550 can be used in this way to determine a further predicted patch. The sensed signature can then also be compared to the predicted patches. This can increase confidence in the location determination.

2. Correlation

Comparison between two signatures is performed by determining their correlation coefficient. In contrast to a direct comparison of two images, the calculation of a correlation coefficient between two signatures can be performed at a speed suitable for use in real time navigation. With a suitable processor and a reasonably constrained search area, all signatures obtained within a single data capture cycle can be correlated with every signature in the signature database for the search area. With the signatures captured as described above, tests using an HP Elitebook 835 G8 Notebook PC, operating with a 1.9 Ghz AMD Ryzen 7 PRO 5850U processor, have found that the signatures from a database covering an area of 50 square kilometres, with patch size of 100 m, can be can be correlated with all the signatures obtained from a data capture cycle within approximately one second. The index searching process described above can therefore be used, as necessary, to determine a most likely region. The index searching process can be complemented using an inertial navigation system to further narrow the size of the region. Within this area, a correlation and matched filter process is used to determine the most likely patch. Where there is persistent difficulty in identifying a series of sufficiently good matches after index searching, various other techniques can be used to compare the patches to the database, such as the use of particle filters.

For a single data capture cycle, the correlation of each captured signature with every database signature is determined. The correlation coefficient $C$ between signatures $S_i$ and $S_{i-1}$ is defined as:

$$C(S_i, S_{i-1}) = \frac{\sum(s_i - \bar{s_i})(s_{i-1} - \bar{s}_{i-1})}{\sqrt{\sum(s_i - \bar{s_i})^2 \sum(s_{i-1} - \bar{s}_{i-1})^2}}$$

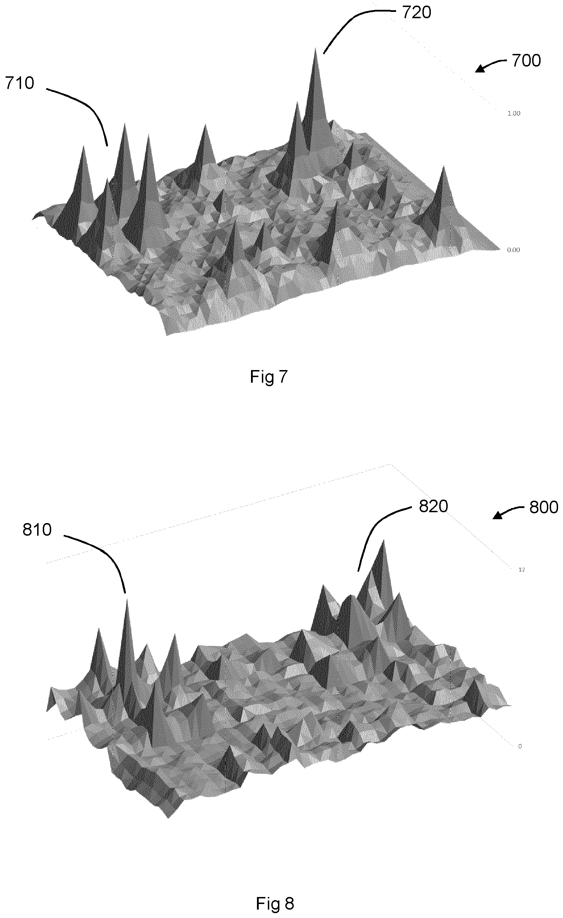

where $S_i$ and $S_{i-1}$ are the individual elements of signatures $S_i$ and $S_{i-1}$ respectively, and the bar accent is used to indicate the average. This provides an array of data that can be plotted as a correlation surface. An indication of what such a surface 700 might look like in the region where the sensed signatures overlie the matching database signatures is shown in Figure 7. Generally, each captured signature is likely to arise from a patch that overlaps with four database patches, resulting in the correlation surface for each captured signature having the shape of a four-pointed crown, such as that indicated generally at 710. It can be seen that other peaks on the correlation surface 700, particularly peak 720, can be larger than the individual peaks of the crown that is more likely to represent an actual match. It will be noted that such a correlation surface can also be calculated at the time of database formation, using the same data that is used to create the database signatures. Such calculated correlation surfaces are used to determine the matched filter introduced above, as will now be described.

For a square patch of side $P$, which is less than a half of the width of the camera field of view, and using a data capture cycle to capture signatures for $n$ patches

$$\frac{1}{n}P$$

within the field of view, with a linear separation of between each captured signal, any four adjacent patches forming a square are covered by $4n$ patches from which signatures are captured. At the point of database formation, the signatures for the database patches are determined and stored in the database along with various characteristics, and their location. At this time, it is possible to use the same data used to determine the signatures for the database patches to determine signatures for each of the $4n$ patches covering every group of four adjacent database patches in the library. This will result in a set of correlation surfaces for which an average can be found. This averaged correlation surface, representing the mean correlation surface of every set of four adjacent database signatures in the database, is stored in the database as a matched filter for that region.

The matched filter is then used to interrogate, by convolution, the correlation surfaces obtained for each captured signature. The result is expected to exhibit distinct spikes at locations for possible matches for the captured signature. Figure 8 provides an example of a surface 800 that may be obtained when plotting the results of the matched filter interrogation of correlation surface 700. Notably, where the matched filter response is high, a strong match with a set of four adjacent patches is indicated, rather than a single patch. As is seen in Figure 8, the largest peak on the surface after interrogation by the matched filter is peak 810, corresponding to the location of the crown-shape 710 in Figure 7. The individual peaks in correlation surface 700, such as peak 720, are considerably lower in relative magnitude in the surface after interrogation by the matched filter, as can be seen at location generally referenced 820, which corresponds to the location of peak 720 in surface 700.

The spikes can be further analysed to determine a best match. Some spikes may be discarded if, for example, the method is to be used in conjunction with another data source, such as an inertial navigation system, which can provide data constraining the area in which the platform may be. Remaining spikes are sorted by size, and the top $m$ are further analysed. The number $m$ is the number of analyses that can be performed by the processor in the available time. Since each spike is associated with four patches, the correlation score for the signatures of each of those four patches are multiplied together, along with any other figures of merit, such as uniqueness or distinctiveness, that are defined in the database. The resulting scores are used to determine the nominal estimate of the relative probability that the position associated with the spike is the location over which the platform is flying, for the current data capture cycle. These relative probabilities can then be used to maintain tracks in a navigation system.

3. Relative motion estimation

An estimate of relative motion can also be made to supplement the information obtained from the location estimation method. Where the location estimation method is used to generate a series of location estimations, the relative motion information can be used for example to maintain a more continuous estimation of motion in between confident determinations of location, or to improve confidence in a location estimation. For each signature obtained in a current data capture cycle, a best match signature from the previous data capture cycle can therefore be determined as being the signature having the highest correlation coefficient with that signature. As the platform moves, the camera field of view moves, but the field of view for the current data capture cycle is expected to overlap with that for the previous data capture cycle. Patches from the overlap area in the current data capture cycle should strongly correlate with patches from the overlap area in the previous data capture cycle.

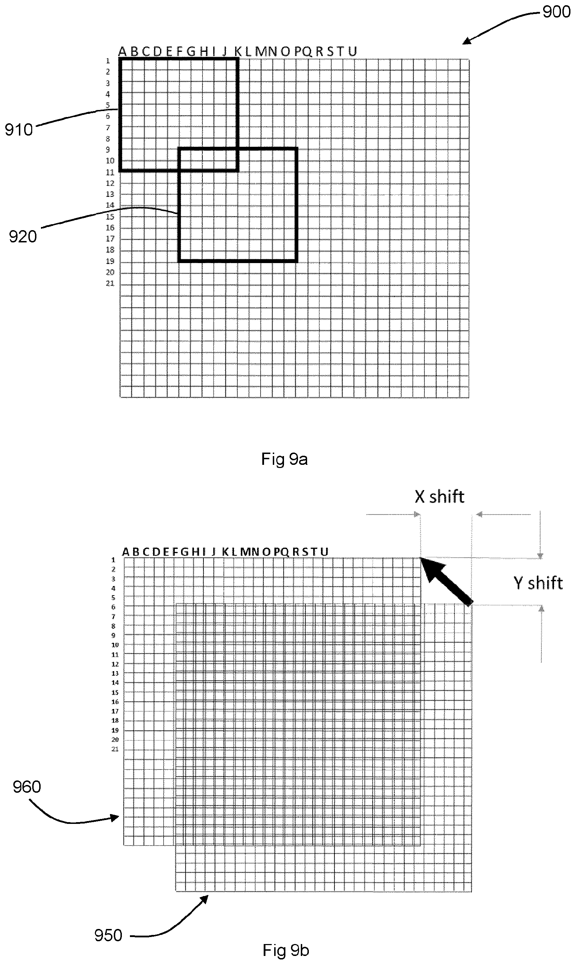

The recording of multiple patches, and the determination of their signatures, enables a comparison of data obtained in sequential data capture cycles to be performed by determining which signatures best match. The layout of such a set of patches is illustrated in Figure 9a, which shows four hundred patches of width $L$ in an area 900 of a field of view of a camera. Two patches, 910 and 920, are illustrated in bold outline for clarity. Using the reference coordinates provided along the top and side of area 900, the upper left corner of patch 910 is at coordinate A1, and the upper left corner of patch 920 is at coordinate F9. In frames recorded for subsequent frames, and as described above, many of the patches will overlap, as is illustrated schematically in Figure 9b for successive frames 950 and 960. From the overlap area, a translational shift of X in the horizontal direction (of slightly over 0.5$L$ in the example illustrated) and Y in the vertical direction (of slightly less than 0.5$L$ in the example illustrated) can be determined, as is explained in further detail below.

Comparison of the relative positions of a pair of matching signatures in the current and previous data capture cycle can provide information about relative motion of the platform between the two data capture cycles. In the overlap area the shift in position between matching signatures should be consistent, and, given the platform altitude above the ground and the angular field of view of the camera used, this shift can be used to infer the distance moved by the platform during the time elapsed between data capture cycles. The platform may carry an altimeter in order to determine its altitude above ground. Computation may be reduced if relative motion data, available from previous data capture cycles or from other sources, can be used to infer a range of possible relative motion for a current cycle. Pairs having a position shift outside this range of possibilities can be discounted.

It is possible that other matches may also be found, and various methods can be used to discount these. One or more consistency criteria may be applied to the matching signatures. For example, a threshold value may be set for the correlation coefficient, and pairs having a correlation score below this value can be ignored. As described in further detail below, the median shift in position between matching pairs can be used as a consistency criterion.

Once inconsistent pairs have been discounted, the shifts between the remaining matching pairs can be used to provide multiple estimates of the relative position change between the two data capture cycles. An average of these estimates can be used as an output relative motion value. For example, a platform having a camera with a square field of view of ground side length 300 m may image 400 square patches of side length of 100 m in a single data capture cycle. The individual patches are evenly distributed across a square grid in the field of view, with their centres separated by 10 m. For a platform travelling at 80 ms-1, with data capture cycles separated by 1 s, there will be 240 overlapping patches, and therefore 240 distinct estimates of relative position shift. An average of these estimates can be used as an output relative motion estimate for the data capture cycle.

In the event that the platform heading has changed between data capture cycles, further processing of the signatures can be performed. Given the time period between data capture cycles, it is unlikely that the heading will significantly change, and so there are still likely to be a number of patches with strong correlation between successive data capture cycles. Where a translational shift has been determined, matching pairs consistent with that shift can be used to determine a heading change. The correlation scores for the signatures for these matching pairs can for example be determined repeatedly, each time shifting one of the signatures by one interval, and determining which shift results in the maximum correlation coefficient. The heading change from the previous data capture cycle to the current data capture cycle can be inferred from the shift resulting in the maximum correlation score. An alternative method of estimating the heading change is described in further detail below.

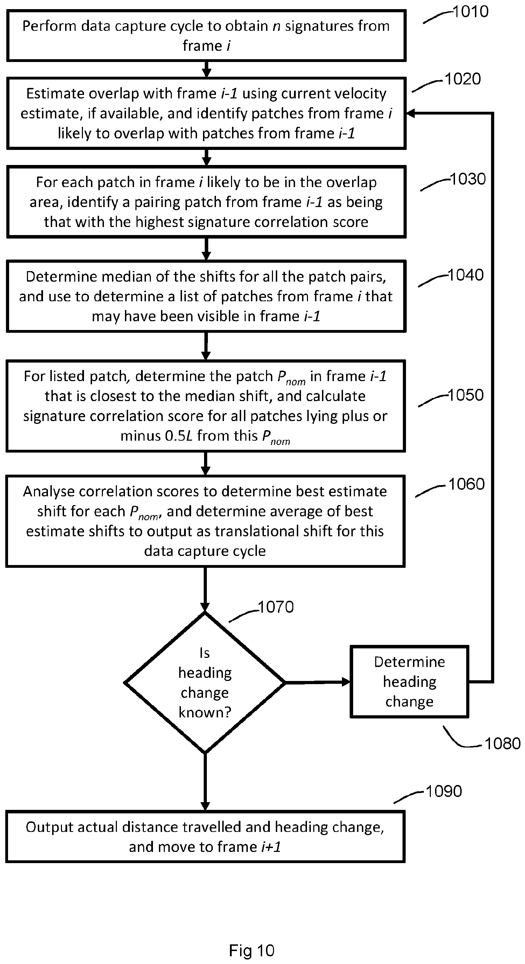

Figure 10 is a flow diagram illustrating the steps in one example method that can be performed to determine the shift, using correlation between signatures, to a high precision.

At step 1010, a data capture cycle is performed to obtain $n$ signatures from frame $i$. Optionally, if an estimate of current velocity and acceleration is available, an estimate of the overlap between frames $i$ and $i-1$ is determined at step 1020. This estimate is used to identify patches in frames $i$ and $i-1$ that may lie in the overlap area. Step 1020 is used to reduce the number of calculations that need to be performed in each iteration of the method, so as to focus only on possible overlapping patches, rather than patches for which overlap is not possible given current motion data. It can be omitted if such a reduction is not necessary, or if no current motion data is available.

At step 1030, the correlation coefficient $C$ between signatures $S_i$ and $S_{i-1}$ for each combination of possibly overlapping patches in frames $i$ and $i-1$ is determined. For each such patch in frame $i$, a pairing patch in frame $i-1$, identified as that patch in frame $i-1$ with which the patch in frame $i$ has the highest correlation coefficient, is noted. The shift of the pairing patch, in the camera sensor frame, is noted.

At step 1040, the median of the shifts between pairing patches is determined, and used to create a list of patches in frame $i$ which may have been visible in frame $i-1$. For each patch in this list, a nominal patch $P_{nom}$ from frame $i-1$ is identified as being the closest matching

patch. $P_{nom}$ is determined as being the patch in frame $i-1$ that is closest to the median shift from the list patch. The correlation coefficient for all patches that lie within a predetermined distance from $P_{nom}$, with the list patch, is then determined. The predetermined distance may for example be $0.5L$ in both the horizontal and vertical directions. This sets a consistency criterion for the determination of the relative position shift, since the individual translational shifts between the matching pairs are constrained to be consistent to within $0.5L$, with those pairs outside this range discounted.

At step 1060, the correlation coefficients obtained at step 1050 are further analysed to determine a more precise shift. The coefficients are plotted so as to form a correlation surface for each $P_{nom}$, which will be expected to be peaked around the actual shift between the two frames. A threshold score is used to delineate the peak, and the shift determined as the weighted centroid of this peak. The threshold can be a one object threshold, or in other words the lowest threshold at and above which only one contiguously connected set of selected points lies. The estimated shift for the data capture cycle is then determined as the mean of the weighted centroid positions for all the $P_{nom}$.

At step 1070, if the heading change has not yet been calculated, the process moves to calculate a heading change at step 1080. If the heading change has already been calculated, the process moves to step 1090. Whilst the position of the overlap can be used to calculate a translational shift, any heading change can be determined from shifts in the signatures of the matching patches. As will be appreciated, if a platform heading has changed by an angular amount, the position of features in the signature will be shifted by the same angular amount. The heading shift is calculated using the resultant vector angles of the signatures for each of the patches listed in step 1040.

The resultant vector angle is calculated by doubling the angle of each interval in the signature, and then creating a vector sum of the signature. In other words, for each interval, a vector is created using the amplitude at that interval, and an angle of double the angle for that interval; all the vectors created in that way for the signature are summed, and the resultant vector defined as having the amplitude of the result, but half the angle. The angle-doubling is required in the present example because the signature describes a system in which the actual responses are (effectively) symmetrical when reflected across the whole 360°. In other words, the bin amplitude at 0° represents the same amplitude as the bin at 180°. A simple average of a signature in which the only the 0 and 180° bins, and were filled, with equal amplitude, would result in a mean angle of 90°, which would be incorrect.

The resultant vector angle $A_i$ is calculated for each of the signatures of the patches listed in step 1040. The resultant vector angle $A_{i-1}$ for the signature of the nominal matching patch $P_{nom}$ from frame $i-1$ is also calculated, and the angular shift from angle $A_i$ to angle $A_{i-1}$ determined. Once all the shifts have been calculated, a mean vector angle, weighted by the amplitude of the resultant vector for each signature is determined. The standard deviation of the mean vector angle is also determined. The calculation of the mean is then repeated, but ignoring values outside of a range of two standard deviations above or below the mean. Since the angle change may affect the translational shift calculation, the process returns to step 1020 and repeats the calculation of translational shift.

At step 1090, the actual displacement is determined using platform altitude above ground and camera field of view to translate the shift in positions on the camera sensor to the ground distance and direction travelled. The actual distance output can be used to update the platforms estimate of its current motion.

Optionally, various adjustments may be made to the captured data to compensate for artefacts arising from the configuration of the apparatus and/or the conditions in which it is desired to navigate. For example, where the camera does not look directly down, a geometric adjustment must be made before processing the data from the camera so as to ensure that the pixels used to calculate any one signature form a square on the ground, and not a square on the camera sensor. Similarly, some adjustments may need to be made in order to compensate for any lens distortions should these have the potential to significantly impact the signature. If geometric adjustments are necessary to ensure a ground-referenced position is used, it may also be necessary to make similar adjustments to ensure that a ground-referenced direction is used for calculating the signature, and not a direct measure of the heading of the sightline in the camera frame of reference.

If the sightline motion, projected onto the ground, deviates from a true semi-circle (or circle, if a full 360° rotation is used for each signature), an adjustment should be made to weight each interval by the angle turned through with respect to the centre of sightline motion pattern. Note that this angle is not the same as the signature interval angle, which is determined by the direction of motion of the sightline projected onto the ground. By way of example, such a weighting must be applied where the sightline projection forms an ellipse on the ground, for which a larger number of events than expected would be recorded per signature interval as the sightline moves parallel to the major axis, whilst a smaller number of events would be recorded as the sightline moves parallel to the minor axis.

In some applications, embodiments of the invention are likely to be used as part of a wider navigation system, incorporating other systems and integrated into wider navigation loops. Other systems may include a device for the receiving GPS signals, or other means of obtaining an absolute indication of the position of the platform. The platform may then include a processor operable to use the relative motion obtained by the above method in combination with an absolute position measurement in order to maintain one or more track hypotheses for the platform.

Notably the same data source is used for the relative motion estimation as well as for the location estimation. Furthermore, the signatures captured for location estimation can also be used for relative motion estimation. It will therefore be understood that there is considerable synergy in using both the location estimation and the relative motion estimation together. It may be that the data capture cycles for the relative motion estimation are performed more frequently than the location estimation achieved by comparison of sensed signatures to database signatures. For example, a location estimation may only be made once every five data capture cycles, or once every ten data capture cycles. However, it may also be that a location estimation is performed for every data capture cycle.

4. Adjustments

Optionally, various adjustments may be made to the captured data to compensate for artefacts arising from the configuration of the apparatus and/or the conditions in which it is desired to navigate. For example, where the camera does not look directly down, a geometric adjustment must be made before processing the data from the camera so as to ensure that the pixels used to calculate any one signature form a square on the ground, and not a square on the camera sensor. Similarly, some adjustments may need to be made in order to compensate for any lens distortions should these have the potential to significantly impact the signature. If geometric adjustments are necessary to ensure a ground-referenced position is used, it may also be necessary to make similar adjustments to ensure that a ground-referenced direction is used for calculating the signature, and not a direct measure of the heading of the sightline in the camera frame of reference.

If the sightline motion, projected onto the ground, deviates from a true semi-circle (or circle, if a full 360° rotation is used for each signature), an adjustment should be made to weight each interval by the angle turned through with respect to the centre of sightline motion pattern. Note that this angle is not the same as the signature interval angle, which is determined by the direction of motion of the sightline projected onto the ground. By way of example, such a weighting must be applied where the sightline projection forms an ellipse on the ground, for which a larger number of events than expected would be recorded per signature interval as the sightline moves parallel to the major axis, whilst a smaller number of events would be recorded as the sightline moves parallel to the minor axis.

Adjustments can also be made in order to compensate for physical changes in a patch which significantly change the signature calculated. For example, a freshly ploughed field having distinct plough lines may significantly affect a signature. Similarly, any features changing in the patch that might results the appearance or disappearance of a number of strongly contrasting straight lines will impact the signature. It may be that such changes result in a significantly lower correlation score for a patch than might be expected, for example if the platform is following a track which, to this point, has shown strong correlation, or if other sources, such as an inertial management unit, provide consistent contrary data. In such cases, it is possible to adjust the correlation-based matching process described above.

To assess whether there is such a change, the correlation score for the patch is calculated if the signature data captured during a first interval is ignored, then a second, then a third, and so on, until the correlation score with each interval in turn being ignored has been found. If this process results in a significantly improved score when one of the intervals is omitted, and the patch is otherwise consistent with other navigation data, that significantly improved score can be used in subsequent processing.

It is possible for features arising from shadows to be dealt with in a similar manner, if they cannot be avoided through the use of LWIR sensors or other techniques outlined above. For example, the platform can be equipped with a clock, and a sensor such as a compass to determine its heading. Processing can then determine which angular intervals will be affected by the shadows. Features which lie in those intervals can then be ignored; or, if several signatures for patches on an expected track are recorded, with correlation scores that consistently improve when a particular angular interval is omitted, the shadow angle can be checked, and the affected interval temporarily removed from the correlation matching process.

Adjustments can also be made to account for any significant three dimensional structures present in the patch. Such structures may create distortion of the signature in dependence on where the patch is viewed from. Since most modern image sensors have an asymmetrical focal plane array, it is possible to use a forward part of the sensor to determine whether or not any such distortion is present. The sensor is mounted with its long axis parallel to the direction of travel. A first portion of the sensor can be used for normal navigation, but a second portion in front of that first portion is also used to sense signatures. As the platform moves forward, those signatures that were sensed by the second portion can be recaptured, but from a different angle, and in the first portion. Any significant differences can be identified and are likely to be due to three dimensional structures in the patch. These patches can then be allocated a reduced confidence level.

NAVIGATION

In some applications, embodiments of the invention are likely to be used as part of a wider navigation system, incorporating other systems and integrated into wider navigation loops. Other systems may include an inertial navigation unit providing data on platform motion. The position estimate may be used as an input into a navigation algorithm receiving other inputs from, for example, an inertial navigation unit, and maintaining one or more track hypotheses for the platform. Where the navigation algorithm is capable of maintaining a plurality of track hypotheses, it may be that a number of position estimates can be output from any one data capture cycle. For example, where the navigation algorithm is capable of maintaining five tracks, the position estimates with the top five scores may be provided from one data capture cycle. New position estimates may be added to a hypothetical track using for example a Kalman filter.

It will be noted that as the track extends, with new position estimates added, confidence in the hypothetical track will increase with consistency (both with prior estimates from previous data capture cycles, and with other data sources, such as data from an inertial management unit) such that the area of uncertainty is expected to shrink, and greater constraints will be placed on the position estimate. Similarly, where new position estimates are outside of an expected range from an existing track hypotheses, confidence in that hypotheses will decrease. After a reasonable period of time has elapsed, sufficient strong signature matches, combined with inertial data, are expected to lead to a position estimate with a high degree of confidence.

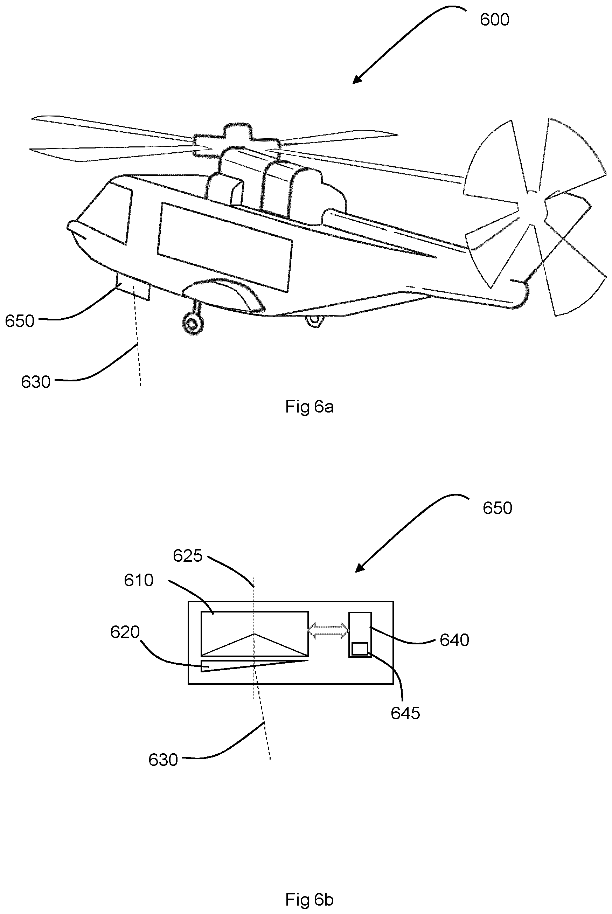

In one example illustrated in Figures 6a and 6b, the platform may be a helicopter 600 equipped with a navigation apparatus 650. The navigation apparatus 650 is shown in more detail in Figure 6b and includes a downward-facing event camera 610 operable, for example, in the LWIR waveband. When the helicopter is in level flight, therefore, the event camera will face towards the ground. Figure 6a is an illustration of the navigation apparatus 650 mounted on helicopter 600. As is shown in Figure 6b, the navigation apparatus comprises an event camera 610 and a processor 640 including a memory store 645. A thin wedge prism 620 is mounted in front of the event camera. The thin wedge deflects the sightline, indicated in dashed line 630 in Figures 6a and 6b, of the event camera through a small angle. The centre point of the event camera field of view (in other words, where the sightline 630 projects onto the ground) is therefore offset slightly from immediately beneath the helicopter. The angular deflection provided by the prism is a small fraction of the angular width of the camera's angular field of view. Prism 620 is mounted so that it is able to rotate in a complete circle about a vertical axis (when the helicopter is in level flight) that is illustrated by the dotted line 625 in Figure 6b. As the prism rotates, camera orientation will not significantly alter, but the centre point of the event camera field of view will define a circle on the ground beneath the helicopter 600. If the helicopter is hovering, the circle will be centred on a point immediately beneath the helicopter. In this example, the helicopter is also equipped with an independent means for sensing its orientation. For example, it may have a magnetic compass. The helicopter in this example is also equipped with an altimeter. Before take-off, the platform operator identifies the region in which the helicopter will fly. The platform operator provides a signature database for the region and stores the database in a memory store 645 of a processor 640 on the navigation apparatus 650.

The signature database in this example comprises square patches with side length 100m. Each square has sides parallel to the north-south and east-west directions, and the signatures are defined with the north direction being represented at 0°. The resolution used to define the signatures is matched to the resolution of the event camera 610 used on the helicopter 600. The patches for which signatures are defined in the database cover the region. As described above, the signature database includes an index as well as the defining features listed above. The signature database can be constructed well in advance of actual operation of the helicopter in the region, and may have been derived from pre-existing aerial imagery of the region, or have been determined directly by prior flights over the region with a platform equipped with both an event camera and independent navigation means, such as GPS.

Once the signature database is provided to the helicopter memory store, the helicopter can begin to fly over the region. The event camera is configured to have a field of view corresponding, on the ground, to a square of at least twice the desired patch width, at the flight altitude of the helicopter. This can be achieved by zooming the event camera, or by altering the flight altitude of the helicopter, or by a combination of zoom and altitude change. The flight altitude is likely to be at least approximately known before take-off, so that the signatures in the database can be selected to be of approximately the right size. Where the field of view is larger than the 100m patch size, any pixels of the event camera field of view outside the patch size can be ignored in subsequent processing. Whilst over the region, the prism is rotated, and a signature recorded for each rotation of the prism. The recording of a signature for each rotation is started when the projection of the sightline on the ground is offset by the nutation radius to the north, defined as 0° in the present example, and is stopped once the projection of the sightline has completed a rotation around a semicircle. The event camera trigger threshold can be set in dependence on the type of terrain in the region and the characteristics of the database of signatures stored in the database. The trigger threshold may for example be determined as a parameter prior to flight, and passed to the helicopter with the database. The rate of rotation of the prism is not critical but is kept constant, and is preferably fast to enable the data for a complete signature to be captured whilst the helicopter remains relatively stationary, so that its forward motion during the time for collection of data for one patch is small or negligible compared to the length of the patch. The actual rate of rotation used will be dependent on various factors, including for example: the angular resolution of the image, the size of the field of view of the camera, the helicopter altitude, the size of the event camera's pixel array, its maximum pixel processing rate, and other factors. A number of overlapping signatures are captured as described above.

Each recorded signature is processed to determine each of the defining features listed above. Because the projection of the sightline moves around a semicircle, there will be a number of pixels in a border region of the field of view that will not be present for the whole sightline rotation. A first step of the processing in the present example is therefore to ignore events captured at these border regions. The index is then searched using the above-described algorithm to identify a matching signature, and the location of the helicopter is thus determined.

The inherent error in the determination of the position of the platform from a single match should be of the order of half the separation of the patch centres. Thus, if the centres of overflown square patches of side length 100 m are separated by 10m, a nominal position error of 5 m might be expected. Once an estimate of location has been calculated, the quality of the match can be estimated using the correlation coefficient between the measured signature and the database signature. This correlation coefficient can be used to estimate the position error from the centre of the patch associated with the database signature. A series of such matches can be used to improve the position estimate, for example in conjunction with a Kalman filter, or a linear or polynomial regression weighted by the values of the correlation coefficients.

Various modifications to the above described embodiments are possible. For example, whilst in the above it has been described that the platform is a helicopter, the location determining method will also work on other airborne platforms. Where those platforms are not capable of hovering, or moving at a sufficiently low speed, account must be taken of the platform's forward motion. Forward motion will result in there being parts of the event camera's field of view that trigger events as a result of the camera's forward motion changing the field of view, rather than because of the change of sightline. In many cases, particularly if the rate of rotation of the sightline is sufficiently rapid relative to the forward motion of the platform, the effect may be only small. However, it will also be possible to remove the effects of forward motion through additional processing of the raw data from the event camera, by compensating the raw angular intervals recorded so that the relative angle of the sightline to a reference angle on the ground is used to create the signature, rather than an angle determined simply from the prism motion. Alternatively or additionally, the event camera itself could be moved in a rocking motion to compensate for the forward motion of the platform such that the locus of the sightline on the ground always does describe the desired trajectory. Further alternatively, rocking the event camera sightline from left to right at an appropriate frequency whilst the platform is in forward motion can result in the sightline creating a locus of connected semicircles. Each semicircle can be used to derive a signature. It may be possible to use various other shapes of sightline motion.

Whilst, in the above, it has been described to apply geometric transformations to the data in order to account for any forward-looking angle of the sensor, it will be understood that it may alternatively be possible to modify the event camera sightline motion to compensate for any forward-looking angle and forward motion of the platform. Such a determination may not be possible for very large slant angles, or only possible with limited accuracy. Some degree of forward-looking is however possible. Similar considerations apply if the platform is not in level flight.

Since an event camera could be used as a forward looking imager in a range of potential aircraft, including unmanned air systems and missiles, it will be noted that an event camera could fulfil multiple roles for the platform, including both imaging and navigation.

It has also been described in the above to use an event camera operating in the LWIR waveband. However, it would also be possible to use event cameras operating in other parts of the spectrum, such as in the visible region or medium wave infrared (MWIR). Many event cameras are commercially available that operate in the visible part of the spectrum. However, it would be necessary to account for the effect of shadows on sensed signatures in both the visible and MWIR wavebands, as is described above. Where an event camera operating in the visible waveband is to be used, it may also be desirable to include an illumination source, such as a laser, so as to enable operation of the navigation apparatus at night. Short wave infrared (SWIR) event cameras may also be used.

It will also be understood that, whilst it has been described to use a generic event camera in the above, any type of event camera could be used. A review of event cameras is provided in Gallego et al., 'Event-Based Vision: A Survey', published in IEEE Transactions on Pattern Analysis and Machine Intelligence, Vol. 44, No. 1, pages 154 to 180, January 2022. There may be many different capture patterns for the data. The trigger threshold for each camera pixel, for example, could be set differently for different event cameras, so as to ensure that the number of triggers does not exceed the rate at which they can be handled by the relevant processor (either a processor embedded in the camera, or a platform processor dedicated to the processing of the event camera data). The trigger threshold can also be adjusted during operation of the navigation method, for example to ensure that the number of events recorded falls within a certain range or below a certain threshold. It may also be possible to use a standard framing camera coupled with suitable processing, although this would require significant processing power in order to operate. For example, it may be possible to use a framing camera in combination with an event camera emulator; or it may be possible to use frame differencing, with a suitably fast frame rate, to identify events when the difference exceeds a trigger. However, given processing requirements, an event camera directly outputting events from pixels responsive to changes in intensity is more likely to be used for embodiments of the present invention.

It will also be possible to use different means of moving the camera sightline, in alternatives to the above-described method of rotating a thin wedge prism in front of the event camera sensor. For example, the sightline could be relayed from the scene to the sensor via a mirror, tilting the mirror surface, and rotating the mirror so that the sightline on the ground describes a circle. In this case, the tilt of the mirror may also be controllable, which may enable compensation of forward platform motion, and enable the radius of the circle described on the ground by the sightline to be controlled. Alternatively, the event camera sensor itself may be nutated so as to move the sightline, for example by providing a suitable gimbal arrangement.

It is further noted that, whilst in the above it has been described to compile a specific database for a specific, known region in which the platform may be flying, the signatures can be combined in such a way that a single reference database can be used for multiple missions. It is expected that the database would not require large memory store (it can be estimated that the signatures for the entire world surface, in 100m square patches, would only require up to 4 Tb of storage), and so it is possible to derive smaller libraries from a reference database. Because of the low memory storage requirement, it may also be possible to provide multiple libraries to a platform if, for example, the platform may operate at different heights during any one mission, so that different size patches or different resolution patches might be useful in the database. In practice, a platform is most likely to start navigation with at least some idea of its position. For example, a missile when launched can easily be provided with its position, and similarly the position of an aircraft when taking off will be known. The database need then cover only a much smaller area. 4Tb of storage could, for example, hold a signature database for an area of a million square kilometres with square patches of side length 8m or less; or a signature database with larger but significantly overlapping patches; or multiple signature libraries with different patch size or camera resolution.

It may also be noted that the signatures for neighbouring patches may not be at all similar. However, where there is some overlap, there will be some correlation between patches, and this property may be used for location determination.

Whilst it has been described in the above to use patches that are square shaped, it will be understood that the patches themselves could take any shape. For example, the patches could be circular; or polygonal. It may not be trivially possible, however, to calculate the signature of a larger circular patch from a number of smaller circular patches. Furthermore, whilst, in the above, it has been described to use all the characteristic features in the database to perform the searching of the indices, in other embodiments which characteristic features to use, and how wide the tolerances should be, can be selected in dependence on specific circumstance. For example, the characteristic features can be selected to be those which experiment during development shows give the best discrimination for the camera in use, or the altitude being flown or the terrain type being overflown. Similarly, the amount of tolerance above and below the measured value of a characteristic feature which has a sufficiently high probability of including the true value, and a sufficiently low number of total matches as to achieve a sufficiently short analysis time, can also be determined during development and may also be a result of conditions such as camera, altitude or terrain type.

Finally, it should be clearly understood that any feature described above in relation to any one embodiment may be used alone, or in combination with other features described, and may also be used in combination with one or more features of any other of the embodiments, or any combination of any other of the embodiments. In particular it should be noted that in all of the above embodiments, the processor hardware may be built specifically for the purpose of controlling apparatus, or, particularly if the apparatus is to be operated in a missile or other aerospace or vehicle platform, may be firmware installed on a platform processor; or the processor may be a general purpose computer with software installed to control the apparatus as described above.

**Claims**

1. A method for estimating the location of an airborne platform, the airborne platform having a ground-facing camera having a field of view, and method comprising the steps of:

   i. moving the sightline of the camera through a range of directions;
   ii. recording events triggered during motion of the sightline, each event being a change in intensity recorded at a pixel of the camera, and associating each event with a ground-referenced position;
   iii. for each ground-referenced position within a patch, determining, from the recorded events, a resultant intensity gradient direction;
   iv. determining a signature for the patch, which signature is the distribution of the resultant intensity gradient directions for the positions in the patch; and
   v. comparing the signature to a signature database to estimate the location of the airborne platform, the signature database comprising a number of predetermined signatures for patches at known locations.

2. A method as claimed in claim 1, wherein the signature is the distribution of the resultant intensity gradient directions amongst a set of intervals of resultant intensity gradient directions.

3. A method as claimed in claim 1 or claim 2, wherein each recorded event includes an indication of the magnitude of the intensity change triggering the event.

4. A method as claimed in claim 3, wherein step (iii) comprises determining a resultant intensity gradient magnitude.

5. A method as claimed in claim 4, wherein the signature is a histogram representing the sum of resultant intensity gradient magnitudes in each of a set of intervals of resultant intensity gradient directions.

6. A method as claimed in any preceding claim, wherein the camera field of view covers an area on the ground that is at least twice the linear size of the patch.

7. A method as claimed in claim 6, further comprising the step of determining a signature for one or more further patches of ground within the camera field of view during motion of the sightline.

8. A method as claimed in claim 7, wherein the separation between the centres of the patch and one of the one or more further patches is in the range between one hundredth and one quarter of the patch width.

9. A method as claimed in any previous claim, wherein the signature database comprises an index, which index comprises a set of index values associated with each of the predetermined signatures, each of the set of index values having an associated characteristic signature feature, and wherein the step of comparing the signature to the signature database comprises determining a value for at least one of the characteristic signature features for the signature, and identifying, from the index, those predetermined signatures having the most similar values for said at least one of the characteristic signature features.

10. A method as claimed in claim 9, wherein the characteristic signature features comprise one or more of: a trigger threshold to which the camera pixels are set; a ratio of a minimum of the distribution to a maximum of the distribution; a mean of the distribution; a standard deviation of the distribution; a direction of the maximum of the distribution; a resultant vector of the signature; an angle between the direction of the maximum of the distribution and the direction of the minimum of the distribution; an angle between the direction of the maximum of the distribution and a direction of a second maximum of the distribution; and the ratio of the standard deviation of the distribution to the mean of the distribution.

11. A method as claimed in any preceding claim, wherein the step of comparing the signature to the signature database comprises the step of determining a correlation between the signature and each of a set of signatures in the signature database, the set of signatures being associated with a set of patches forming an integral region of terrain.

12. A method as claimed in claim 11, further comprising the step of defining a matched filter for the signature database, the matched filter being determined from the signatures in the database, and using the matched filter to interrogate the correlation between the signature and each of a set of signatures in the signature database.

13. A method as claimed in any previous claim, wherein the index of the signature database further comprises one or more figures of merit associated with each patch, which figures of merit provide a weighting to indicate a confidence level that can be associated with a signature match for that patch.

14. A computer-readable medium carrying instructions which, when read by a computer onboard an airborne platform, which airborne platform comprises a ground-facing camera, cause the computer to implement the method of any one of claims 1 to 13.

15. An airborne platform comprising an event camera, a sensor operable to determine the altitude of the platform above the ground, and a processor, the event camera being arranged such that its sightline is movable; and the processor being configured to implement the method of any one of claims 1 to 13.

110

| Provide signature database | → | Store signature database on platform memory store | 120 |

↓

| Capture event data whilst moving sightline in predetermined trajectory | 130 |

↓

| Process event data to determine signature | 140 |

↓

| Compare captured signature to signature database | 150 |

↓

| Determine location | 160 |

Fig 1

200

210

250

Fig 2

Fig 3

Fig 4

```
┌─────────────────────────────────────────────────┐     ╭─510
│        Provide sensed signature to processor     │    ╱
└─────────────────────────────────────────────────┘
                        │
                        ▼
┌─────────────────────────────────────────────────┐     ╭─520
│   Determine value of characteristic feature      │    ╱
│   for sensed patch and predicted patches         │
└─────────────────────────────────────────────────┘
                        │
                        ▼
┌─────────────────────────────────────────────────┐     ╭─530
│  Interrogate digitised index to determine rank   │    ╱
│  of closest digitised values above and below     │
│       sensed characteristic feature value        │
└─────────────────────────────────────────────────┘
                        │
                        ▼
┌─────────────────────────────────────────────────┐     ╭─540
│  Interrogate rank index to determine unique ID   │    ╱
│        value for closest digitised values        │
└─────────────────────────────────────────────────┘
                        │
                        ▼
┌─────────────────────────────────────────────────┐     ╭─550
│   Interrogate value index to determine           │    ╱
│   characteristic feature values bracketing       │
│               sensed value                       │
└─────────────────────────────────────────────────┘
                        │
                        ▼
                    ╱╲  All
          No      ╱    ╲ characteristic    ╭─560
        ◄────────◄      ► features         ╱
                  ╲    ╱  analysed?
                    ╲╱
                     │ Yes
```

Calculate next likely position based on each candidate patch to predict a set of next likely patches  — 570

Determine score for all candidate patches  — 580

Determine most likely location from scores  — 590

Fig 5

600

650

630

Fig 6a

650

625

610

620

640

645

630

Fig 6b

Fig 7

Fig 8

Fig 9a

Fig 9b

Perform data capture cycle to obtain *n* signatures from frame *i* — 1010

Estimate overlap with frame *i-1* using current velocity estimate, if available, and identify patches from frame *i* likely to overlap with patches from frame *i-1* — 1020

For each patch in frame *i* likely to be in the overlap area, identify a pairing patch from frame *i-1* as being that with the highest signature correlation score — 1030

Determine median of the shifts for all the patch pairs, and use to determine a list of patches from frame *i* that may have been visible in frame *i-1* — 1040

For listed patch, determine the patch $P_{nom}$ in frame *i-1* that is closest to the median shift, and calculate signature correlation score for all patches lying plus or minus 0.5*L* from this $P_{nom}$ — 1050

Analyse correlation scores to determine best estimate shift for each $P_{nom}$, and determine average of best estimate shifts to output as translational shift for this data capture cycle — 1060

Is heading change known? — 1070

Determine heading change — 1080

Output actual distance travelled and heading change, and move to frame *i+1* — 1090

Fig 10

**EUROPEAN SEARCH REPORT**

| | Application Number |
|---|---|
| | EP 24 27 5089 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 10 515 458 B1 (YAKIMENKO OLEG A [US] ET AL) 24 December 2019 (2019-12-24)<br>* claim 1; figures 1-4 *<br>----- | 1,14,15 | INV.<br>G01C21/00 |

| | TECHNICAL FIELDS SEARCHED (IPC) |
|---|---|
| | G01C |

The present search report has been drawn up for all claims

| Place of search | Date of completion of the search | Examiner |
|---|---|---|
| The Hague | 11 December 2024 | Tabellion, Marc |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

    .........................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 27 5089

This annex lists the patent family members relating to the patent documents cited in the above-mentioned European search report.
The members are as contained in the European Patent Office EDP file on
The European Patent Office is in no way liable for these particulars which are merely given for the purpose of information.

11-12-2024

| Patent document cited in search report | Publication date | Patent family member(s) | Publication date |
|---|---|---|---|
| US 10515458 B1 | 24-12-2019 | NONE | |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **GALLEGO et al.** Event-Based Vision: A Survey. *IEEE Transactions on Pattern Analysis and Machine Intelligence*, January 2022, vol. 44 (1), 154-180